# FASCICULE DE BREVET EUROPEEN

(11) **EP 3 433 143 B1**
(45) Date de publication et mention de la délivrance du brevet: **14.07.2021**
(21) Numéro de dépôt: 17711229.9
(22) Date de dépôt: 20.03.2017
(51) Int. Cl.: B60S 1/08, B60S 1/48

(54) **PROCÉDÉ ET SYSTÈME DE PILOTAGE DU NETTOYAGE D'UNE VITRE DE VÉHICULE, ET ENSEMBLE COMPORTANT UN TEL SYSTÈME ET UN DISPOSITIF DE NETTOYAGE**
VERFAHREN UND SYSTEM ZUR STEUERUNG DER REINIGUNG EINES FAHRZEUGFENSTERS UND ANORDNUNG MIT SOLCH EINEM SYSTEM UND EINER REINIGUNGSVORRICHTUNG
METHOD AND SYSTEM FOR CONTROLLING THE CLEANING OF A VEHICLE WINDOW, AND ASSEMBLY COMPRISING SUCH A SYSTEM AND A CLEANING DEVICE

(30) Priorité: 24.03.2016 FR 1652518
(43) Date de publication de la demande: 30.01.2019
(73) Titulaire: Valeo Systèmes d'Essuyage, 78322 Le Mesnil Saint Denis (FR)
(72) Inventeur: THEBAULT, Denis, 63500 Issoire (FR); GIRAUD, Frédéric, 78320 Le Mesnil Saint Denis (FR); TERRASSE, Jean-Luc, 78320 Le Mesnil Saint Denis (FR)
(74) Mandataire: Valeo Vision
(86) Numéro de dépôt international: PCT/EP2017/056596
(87) Numéro de publication internationale: WO 2017/162609

(56) Documents cités:
- WO-A1-2017/137397
- DE-A1-102012 207 925
- FR-A1- 2 987 016
- JP-A- H0 211 442
- JP-A- 2006 347 297
- US-A1- 2004 021 575
- US-A1- 2007 056 947
- US-A1- 2014 217 194

## Description

### DOMAINE TECHNIQUE DE L'INVENTION

L'invention concerne un procédé de pilotage d'un système de nettoyage d'une vitre de véhicule automobile qui comprend un cycle de déneigement, un système de pilotage d'un dispositif de nettoyage, et encore un ensemble comportant un tel système et un dispositif de nettoyage par exemple du type à essuie-glace.

### ARRIERE PLAN TECHNIQUE DE L'INVENTION

Selon une conception connue, un véhicule automobile est équipé d'un système d'essuyage et de lavage de la surface extérieure de vitre équipant le véhicule, et notamment du pare-brise du véhicule.

Un tel système d'essuyage et de lavage permet d'éviter que la vision qu'a le conducteur de son environnement ne soit perturbée notamment lorsque le véhicule roule sous la pluie.

Un tel système peut comporter un ou plusieurs balais d'essuie-glace dont chacun est conçu pour racler au moins une partie de la surface extérieure de la vitre, notamment de manière à évacuer de l'eau présente sur cette surface.

Des gicleurs ou des buses de projection sont par exemple disposés sur une partie de carrosserie du véhicule au voisinage de la vitre à essuyer ou peuvent être intégrés au balai d'essuie-glace et sont alimentés en liquide dit de lave-glace, par l'intermédiaire d'un circuit comportant notamment une pompe et un système de canalisations reliées à un réservoir de liquide de lave-glace, pour projeter ce liquide sur la surface de la vitre dont on désire effectuer une opération de lavage.

Par ailleurs, il est aussi connu d'équiper un véhicule d'un système de nettoyage de la vitre visant à débarrasser la surface extérieure de la vitre de corps solides qui y sont collés tels que par exemple des insectes ou du givre.

Lorsque le système de nettoyage a pour fonction d'assurer un dégivrage de la surface extérieure de la vitre, il peut comporter un second réservoir comportant un liquide de dégivrage éventuellement associé à une pompe supplémentaire et à un système de canalisation complémentaire.

Ainsi, par temps froid, les gicleurs buses sont alimentés en liquide de dégivrage par des moyens reliés au réservoir de liquide de dégivrage.

Ce système peut aussi être utilisé, avec un liquide adapté, pour décoller les salissures causées par exemple par l'écrasement de moustiques ou d'autres insectes sur la surface extérieure du pare-brise. Le liquide est alors utilisé pour dissoudre ou décoller ces salissures avant que la lame d'essuyage du balai d'essuie-glace ne racle la surface extérieure du pare-brise pour les évacuer.

La demanderesse a déjà proposé différents exemples de conception de systèmes et de dispositifs de dégivrage ou de nettoyage d'insectes qui font notamment appel à la mise en œuvre de programmes commandés dans lesquels on utilise une projection de liquide spécifique.

La mise en œuvre de tels programmes fait ainsi appel à une consommation d'un liquide spécifique qui est relativement coûteux et qu'il y a lieu d'utiliser de la manière la plus efficace.

Il est ainsi souhaitable d'éviter de consommer inutilement le liquide spécifique de dégivrage lorsque la surface extérieure de la vitre à dégivrer est recouverte en tout ou partie d'une couche de neige plus ou moins importante.

En effet, si l'on projette du liquide spécifique de dégivrage sur de la neige présente sur la surface extérieure de la vitre à dégivrer, le liquide se mélange à la neige et n'assure pas son rôle de liquide de dégivrage de manière efficace, soit parce qu'il n'atteint pas la couche de givre sous la neige, soit parce que seulement une faible quantité du liquide dégivrage atteint la couche de givre.

Il est ainsi souhaitable de voir piloter un système de nettoyage d'une vitre de véhicule automobile par mise en œuvre d'un cycle de déneigement, avant toute mise en œuvre d'un cycle de nettoyage tel qu'un cycle de dégivrage. JP-A-2006347297 montre les préambules des revendications 1 et 7.

### BREF RESUME DE L'INVENTION

L'invention propose un procédé de pilotage d'un système de nettoyage d'une vitre de véhicule automobile, procédé qui comprend un cycle de déneigement comprenant :
- une étape d'acquisition d'au moins une donnée qui est représentative de la présence ou de l'absence de neige sur une surface extérieure de la vitre, ou qui est représentative de la probabilité de présence de neige sur une surface extérieure de la vitre ;
- et une étape d'analyse de ladite donnée dont le résultat, lorsque la présence de neige a été détectée ou lorsque la probabilité de présence de neige est supérieure à une valeur de seuil déterminée, est de lancer une opération de déneigement visant à débarrasser la vitre d'au moins une partie de la neige.

Il est ainsi possible de détecter la présence de neige, ou la probabilité de présence de neige, sur au moins une partie de la surface extérieure de la vitre, par exemple du pare-brise avant de déclencher un cycle de dégivrage.

Selon d'autres caractéristiques du procédé :
- l'opération de déneigement est réitérée jusqu'à l'obtention d'un niveau déterminé de déneigement de la vitre ;
- le procédé de nettoyage comprend un cycle de nettoyage de la vitre qui peut être déclenché à l'issue du cycle de déneigement ;
- ce cycle de nettoyage est un cycle de dégivrage de la vitre, par exemple par projection d'un liquide de dégivrage en direction de la surface extérieure de la vitre préalablement déneigée**.** Selon l'invention, le cycle de déneigement est déclenché en réponse à un ordre de déneigement émis par un utilisateur du véhicule et l'ordre de déneigement est émis à distance par un utilisateur du véhicule, par exemple à partir de son domicile ou de son lieu de travail, et l'ordre est transmis au système de nettoyage. Selon d'autres caractéristiques du procédé :
   - en réponse à l'ordre de déneigement, le cycle de déneigement est déclenché de manière différée et/ou séquentielle
   - l'étape d'acquisition d'au moins une donnée représentative de la présence ou de l'absence de neige sur la surface extérieure de la vitre est réalisée au moyen d'au moins un capteur, tel que par exemple une caméra, embarqué à bord du véhicule ;
   - l'étape d'acquisition d'au moins une donnée représentative de la probabilité de présence de neige sur la surface extérieure de la vitre est une étape d'acquisition de données météorologiques et/ou de localisation géographique du véhicule à l'arrêt et/ou en cours de roulage, par exemple au moyen d'un système de géolocalisation du véhicule. Selon l'invention, préalablement au démarrage d'un cycle de déneigement, ou au cours d'un cycle de déneigement, le procédé comporte une étape de mesure d'un niveau d'énergie disponible à bord du véhicule pour l'entraînement de moyens de balayage de la surface extérieure de la vitre, et par exemple une étape de mesure du niveau de charge d'une batterie électrique du véhicule ; et lorsque l'étape de mesure révèle un niveau d'énergie disponible inférieur à une valeur de seuil déterminée, le cycle de déneigement ne démarre pas ou est interrompu, de préférence une information correspondante est transmise à l'utilisateur du véhicule afin de le prévenir des circonstances inhérentes par exemple au niveau de charge insuffisant de la batterie. Selon d'autres caractéristiques du procédé :
      - l'opération de déneigement est effectuée au moyen d'un dispositif de nettoyage de surface extérieure de la vitre qui est conçu pour débarrasser la vitre d'au moins une partie d'une neige présente cette surface, et qui comporte au moins un balai d'essuie-glace conçu pour fonctionner :
      - selon un premier mode, d'essuyage, au cours duquel le balai d'essuie-glace se déplace angulairement entre une position extrême d'essuyage et une autre position extrême d'essuyage ;
      - et selon un deuxième mode, de déneigement, au cours duquel le balai d'essuie-glace peut se déplacer angulairement entre deux positions extrêmes de balayage de la neige dont l'une au moins est située angulairement au delà de l'une desdites deux positions extrêmes d'essuyage, de façon à évacuer la quantité de neige balayée par exemple en dehors d'une zone délimitée par l'encadrement de la vitre.

L'invention propose aussi un système de pilotage d'un dispositif de nettoyage d'une vitre de véhicule automobile, comprenant :
- au moins un capteur d'acquisition d'au moins une donnée qui est représentative de la présence ou de l'absence de neige sur une surface extérieure de la vitre, ou qui est représentative de la probabilité de présence de neige sur une surface extérieure de la vitre ;
- et un premier moyen électronique de communication au moins avec le capteur d'acquisition, et de réception d'un ordre de déclenchement d'un cycle de déneigement,
caractérisé en ce que le premier moyen électronique est conçu :
- pour analyser ladite au moins une donnée ;
- et pour, lorsque la présence de neige a été détectée ou lorsque la probabilité de présence de neige est supérieure à une valeur de seuil déterminée, lancer au moins une opération de déneigement de la vitre visant à débarrasser la vitre d'au moins une partie de la neige.

Selon d'autres caractéristiques du système :
- il comprend des moyens de déclenchement d'un cycle de nettoyage de la vitre qui peut être déclenché à l'issue du cycle de déneigement, et par exemple d'un cycle de dégivrage de la vitre ;

Selon l'invention, le système comprend un deuxième moyen électronique qui est connecté au premier moyen électronique et qui est conçu pour communiquer avec un terminal portable de manière à recevoir au moins un ordre émis à distance par un utilisateur du véhicule, et de manière à transmettre à l'utilisateur des informations provenant du système telles que par exemple une information relative au non déclenchement d'un cycle de déneigement et/ou à l'interruption d'un cycle de déneigement et ; il comprend au moins un capteur de mesure d'un niveau d'énergie disponible à bord du véhicule pour l'entraînement de moyens de balayage de la surface extérieure de la vitre, tel que par exemple un capteur de mesure d'un niveau de charge d'une batterie électrique du véhicule et ; le capteur de mesure est connecté au premier moyen électronique, et ce premier moyen électronique est conçu pour ne pas déclencher, ou pour interrompre, le cycle de déneigement lorsque la valeur d'un niveau d'énergie mesurée par le capteur de mesure est inférieur à une valeur de seuil déterminée. Selon d'autres caractéristiques du système :
- le capteur d'acquisition d'au moins une donnée représentative de la présence ou de l'absence de neige sur la surface extérieure de la vitre est un capteur embarqué à bord du véhicule ;
- le capteur d'acquisition d'au moins une donnée représentative de la probabilité de présence de neige sur la surface extérieure de la vitre est un capteur d'acquisition de données météorologiques et/ou de localisation géographique du véhicule à l'arrêt et/ou en cours de roulage.

L'invention propose encore un ensemble comportant un système de pilotage d'un système de nettoyage selon l'invention et un dispositif de nettoyage de la vitre conçu pour effectuer au moins une opération de balayage de la surface extérieure de la vitre visant à la débarrasser d'au moins une partie d'une neige présente sur cette surface.

Selon une autre caractéristique de l'ensemble, le dispositif de nettoyage comporte au moins un balai d'essuie-glace, ledit balai d'essuie-glace étant de préférence conçu pour fonctionner :
- selon un premier mode, d'essuyage, au cours duquel il se déplace angulairement entre une position extrême d'essuyage et une autre position extrême d'essuyage ;
- et selon un second mode, de déneigement, au cours duquel il peut se déplacer angulairement entre deux positions extrêmes, de balayage de la neige, dont l'une au moins est située angulairement au delà de l'une desdites deux positions extrêmes d'essuyage.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique d'un système de nettoyage d'une vitre, ici d'un pare-brise de véhicule automobile ;
- la figure 2 est une vue schématique d'un ensemble comprenant un système de pilotage selon l'invention et le système de nettoyage de la figure 1;
- la figure 3 est un diagramme illustrant les étapes d'un exemple d'un procédé selon l'invention, comportant un cycle de déneigement, de pilotage du système de nettoyage de la figure 1 ;
- la figure 4 est une vue schématique illustrant l'association d'un capteur de charge de la batterie avec le système de pilotage ;
- la figure 5 est un diagramme illustrant les étapes d'une boucle de gestion de la mise en œuvre d'un cycle de déneigement du procédé illustré à la figure 3, en fonction du niveau de charge de la batterie électrique du véhicule.

### DESCRIPTION DETAILLEE DES FIGURES

Dans la suite de la description, des éléments et composants présentant une structure identique ou des fonctions analogues seront désignés par des mêmes références.

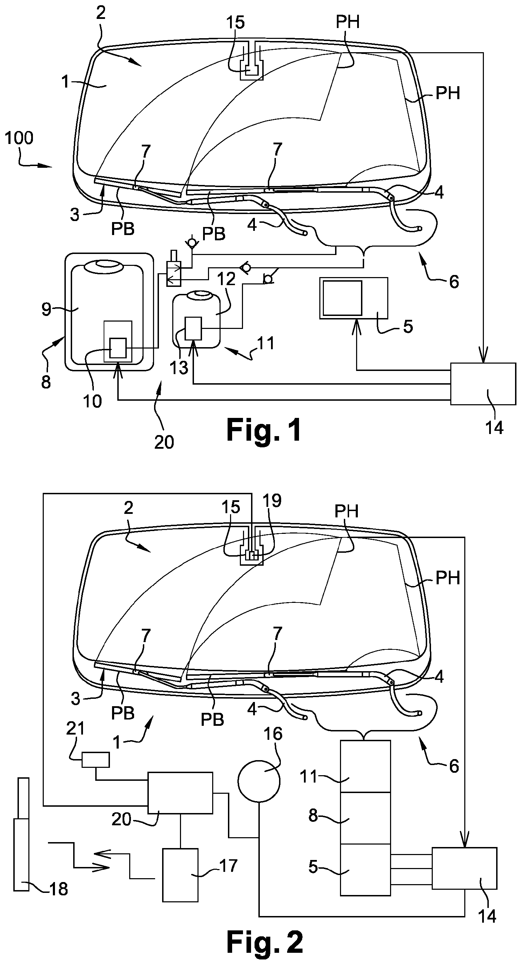

A titre d'exemple non limitatif, l'invention concerne le pilotage d'un système 100 de nettoyage de la surface extérieure 1 d'une vitre d'un véhicule automobile, qui est ici un pare-brise 2, tel qu'illustré à la figure 1.

Le système comporte un dispositif de nettoyage 100 qui comporte ici deux balais d'essuie-glace, ou balais d'essuyage 3, dont chacun est monté sur un bras d'essuie-glace associé 4.

Chaque balai d'essuie-glace est apte à se déplacer angulairement le long de la surface extérieure 1 du pare-brise 2 entre une position extrême basse d'essuyage PB et une position extrême haute d'essuyage PH, et inversement.

Le dispositif de nettoyage comprend aussi un moteur électrique 5 qui est destiné à entraîner les bras d'essuie-glace, et donc les balais d'essuyage 3 en balayage angulaire alterné.

Le système de nettoyage 100 comprend aussi un ensemble de moyens de projection de liquide sur la surface extérieure du pare-brise.

Ces moyens comportent ici un système 6 de canalisation(s) relié à des gicleurs (ou buses) 7 destinés à éjecter et projeter du liquide sur le pare-brise 2.

Les gicleurs 7 sont ici situés et répartis tout le long des balais d'essuie-glace 3, et ils sont disposés de manière à projeter du liquide vers le haut des balais d'essuyage 3, c'est-à-dire vers le haut du pare-brise 2.

Selon une première variante, les gicleurs peuvent être situés le long des balais d'essuie-glace 3 uniquement en regard de la position extrême haute d'essuyage PB. Dans ce cas, la projection de liquide peut s'effectuer uniquement dans le sens de la montée de la position basse PB vers la position haute PH, uniquement dans le sens de la descente de la position haute PH vers la position basse PB, ou aussi bien dans le sens de la montée que dans le sens de la descente.

Selon une deuxième variante, le système peut être mis en œuvre avec des gicleurs situés des deux côtés longitudinaux des balais d'essuie-glace. Comme décrit ci-dessus, la projection de liquide peut s'effectuer alors soit uniquement dans le sens de la montée de la position basse PB vers la position haute PH, soit uniquement dans le sens de la descente de la position haute PH vers la position basse PB, ou dans les deux sens, c'est-à-dire selon le sens de la montée et selon le sens de la descente. La projection de liquide est effectuée alors à l'aide des gicleurs disposés face au côté d'avancement ou opposés au côté d'avancement selon l'effet recherché.

Il est aussi possible que des gicleurs 7 agencés des deux côtés des balais d'essuyage 3 projettent simultanément le liquide.

Le système de canalisation(s) 6 est alimenté en liquide à projeter par deux circuits amont distincts dont chacun est associé à une fonction spécifique demandée au système de nettoyage 1.

Pour une fonction de lavage normale ou classique visant à éliminer de l'eau et/ou des saletés présente(nt) à la surface extérieure du pare-brise, un premier circuit 8 comporte un premier réservoir 9 - contenant un liquide de lavage - et une première pompe 10 destinée à faire circuler le liquide de lavage dans le système de canalisation(s) 6.

Pour une fonction de nettoyage telle qu'une fonction de dégivrage, un deuxième circuit 11 comporte un deuxième réservoir 12 - contenant un liquide de dégivrage - et une deuxième pompe 13 destinée à faire circuler le liquide de dégivrage dans le système de canalisation(s) 6.

Une telle fonction de dégivrage est utilisée pour enlever du givre formé sur la surface extérieure de la vitre, ici du pare-brise.

Le dispositif de nettoyage 100 peut être conçu pour pouvoir aussi nettoyer des insectes collés sur le pare-brise 2.

Le deuxième réservoir 12 peut se présenter sous la forme d'une cartouche amovible. En changeant par exemple de cartouche, Il est alors possible de remplacer un liquide de dégivrage par un liquide de nettoyage adapté au nettoyage des insectes, par exemple contenant un détergent spécifique.

En fonction par exemple de la saison et / ou du climat, on peut ainsi adapter le système de nettoyage soit à une fonction de dégivrage soit à une fonction de nettoyage des insectes.

Par rapport à une fonction de lavage normale ou classique, les fonctions de dégivrage et de nettoyage d'insectes ont pour particularité de débarrasser le pare-brise d'une matière adhérente à la surface extérieure 1 du pare-brise 2, pour laquelle le liquide utilisé pour la fonction de lavage n'est pas adapté.

Pour faire fondre le givre en vue de le décoller du pare-brise, le système de nettoyage 100 utilise un liquide particulier qui est coûteux et qu'il y a lieu d'utiliser en quantité minimale.

Le système de nettoyage 100 comprend un boîtier électronique 14 capable de commander le moteur électrique 5 d'entraînement des balais d'essuie-glace 3 et l'activation des pompes 10, 13 des deux circuits 8, 11 d'alimentation en liquide pour faire exécuter au système différents cycles de fonctionnement, dont des cycles adaptés soit à la fonction de lavage normale, avec le liquide de lavage présent dans le premier réservoir 9, soit l'une des fonctions de dégivrage et/ou de nettoyage d'insectes, avec le liquide spécifique présent dans le deuxième réservoir 12.

Le boîtier électronique de commande 14 peut être plus ou moins simple, selon la complexité des opérations prévues pour exécuter les différents cycles et remplir les différentes fonctions.

Le véhicule peut être équipé en outre d'un capteur 15 de mesure de la température extérieure qui est ici situé sur une partie haute du pare-brise 2, au milieu de celui-ci, sans que cette position ne soit limitative.

Le capteur 15 de mesure de la température peut être directement exposé à l'air ambiant extérieur du véhicule, et il est destiné à mesurer la température extérieure par exemple dans une plage de valeurs allant de -50°C à +50°C.

Dans ce cas, le boîtier électronique de commande 14 peut être relié au capteur 15 de mesure de la température extérieure et exploiter des données fournies par ce capteur pour adapter des paramètres des différents cycles et remplir les différentes fonctions exécutées par le système.

En se reportant à la figure 2, le véhicule comprend de manière connue des moyens embarqués 16 de commande qui permettent à un conducteur de transmettre des ordres au boîtier de commande 14 pour faire exécuter différents cycles et faire remplir les différentes fonctions par le système.

Normalement, les fonctions de dégivrage et/ou de nettoyage des insectes doivent être mises en œuvre à l'arrêt du véhicule. Dans cette hypothèse, les moyens embarqués 16 de commande peuvent comporter des dispositifs de sécurité pour interdire la mise en œuvre de ces fonctions lorsque le véhicule roule.

Le véhicule est équipé d'un module électronique 17 de télétransmission pour, lorsque le véhicule est stationné, permettre à un utilisateur de lancer à distance des cycles de dégivrage ou de nettoyage des salissures.

Le module électronique 17 de télétransmission est agencé pour communiquer avec un terminal 18 par exemple portable, qui est par exemple un téléphone mobile, à partir duquel l'utilisateur peut émettre à distance des ordres de commande à destination du système de nettoyage 100 et/ou lire des messages contenant des informations qui lui sont transmises par différentes sources parmi lesquelles des informations fournies par le système de nettoyage.

Comme illustré à la figure 2, le véhicule est équipé d'un capteur 19 de détermination de l'état de la surface extérieure du pare-brise 2. Il est aussi équipé d'un module électronique de pilotage 20 conçu pour analyser et exploiter des données fournies par le capteur 19.

Le module électronique de pilotage 20 peut être un boîtier spécifique appartenant au système de nettoyage ou il peut être constitué par une partie d'un ordinateur de bord, en fonction du type de véhicule.

Sur l'exemple illustré à la figure 2, le module électronique 20 de pilotage est connecté électriquement au module électronique 17 de télétransmission, notamment pour communiquer avec le terminal portable 18 et transmettre des ordres de commande au boîtier de commande 14.

Le capteur 19 et le module électronique 20 de pilotage sont conçus pour analyser l'état de la surface extérieure du pare-brise 2.

A la figure 2, le capteur 19 est agencé à l'intérieur du véhicule et peut par exemple comporter une caméra regardant vers l'extérieur au-travers du pare-brise.

Le capteur 19 est installée de manière à ne pas gêner la vision du conducteur, et de manière que son champ de prise de vue traverse une portion de pare-brise représentative de l'état général de la surface extérieure de ce dernier.

Le capteur 19 est par exemple installé en haut au milieu du pare-brise, en général au niveau du rétroviseur intérieur de l'habitacle, et son champ traverse une portion du pare-brise 2 qui peut être balayée par au moins l'un des balais d'essuie-glace 3.

A titre - non limitatif - de variantes, le capteur 19 peut comporter une caméra installée à l'extérieur du véhicule, voire un capteur à ultrasons agencé sur la vitre 2.

Quelle que soit sa conception, le capteur 19 peut fournir des données relatives à la présence et/ou à l'absence de toute matière ou tout produit présent qui adhère à la surface extérieure du pare-brise.

A ce titre, le capteur 19 et le module électronique 20 de pilotage sont conçus pour analyser l'état de la surface extérieure 1 du pare-brise 2 et déterminer la présence ou non de neige sur la surface extérieure du pare-brise.

Selon certaines conceptions, le capteur 19 et le module électronique 20 de pilotage sont conçus pour analyser l'état de la surface extérieure du pare-brise 2, et déterminer la quantité de neige - en étendue surfacique et/ou en épaisseur de la couche de neige - présente sur la surface extérieure du pare-brise 2.

Le véhicule peut aussi être équipé d'un capteur 21 de localisation de la position géographique du véhicule qui est relié au module électronique de pilotage 20. Un tel capteur, ou tout autre moyen équivalent de géolocalisation du véhicule, permet au module électronique de pilotage 20 de connaître en temps réel, ou d'avoir mémorisé, la localisation géographique du véhicule, notamment lorsqu'il est à l'arrêt.

Le véhicule peut aussi recevoir en temps réel, ou mémoriser, des informations ou données météorologiques fournies par un prestataire de services. Ces données peuvent par exemple être reçues par le module électronique de télétransmission 17 ou par tout autre moyen de communication à distance dont le véhicule est équipé.

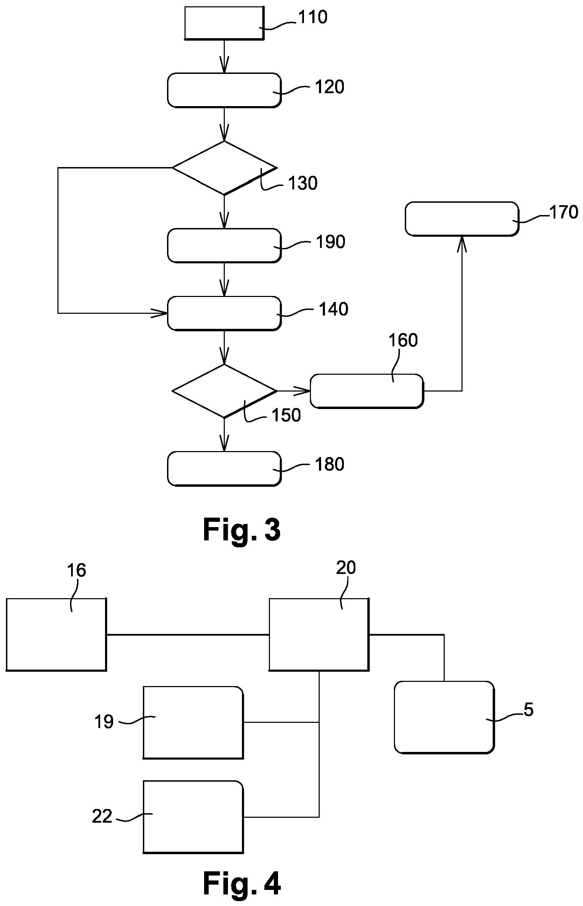

En référence au diagramme illustré à la figure 3, il va être décrit maintenant un premier exemple d'un procédé selon l'invention de pilotage du système de nettoyage 100.

À titre d'exemple non limitatif, l'utilisateur souhaite ici déclencher un cycle de dégivrage de la surface extérieure du pare-brise 2.

À cet effet, au moyen par exemple du bouton de commande 16 ou l'aide de son téléphone mobile 18, à l'étape 110 il transmet un ordre de déclenchement d'un cycle de dégivrage.

Conformément aux enseignements de l'invention, et afin notamment d'économiser le liquide de dégivrage qui sera consommé à cette fin, le module électronique 20 de pilotage du système 100 de nettoyage déclenche une étape 120 d'acquisition de données visant à déterminer si de la neige est présente sur la surface extérieure 1 du pare-brise 2.

Dans ce premier exemple, l'étape 120 est réalisée en utilisant le capteur 19, qui peut comme décrit ci-dessus être une caméra. Les données d'images ou de prise de vues fournies par le capteur 19 sont transmises au boîtier électronique 20 de pilotage qui est capable de les analyser pour déterminer la présence ou non de neige sur le pare-brise 2.

Ainsi, le boîtier électronique 20 de pilotage effectue une étape 130 d'analyse et fournit un résultat représentatif de la présence ou non de neige sur la surface extérieure 1 du pare-brise 2.

Si le résultat de l'étape 130 d'analyse est négatif, c'est-à-dire si il n'y a pas de neige sur le pare-brise 2, ou bien si la quantité de neige présente est évaluée comme étant très faible ou négligeable, le module électronique 20 de pilotage déclenche alors une étape 140 de démarrage d'un cycle de nettoyage de la vitre qui est ici un cycle de dégivrage en réponse à l'ordre transmis à l'étape 110.

De manière connue, l'étape 140 de démarrage d'un cycle de dégivrage peut être suivie d'une étape 150 de détermination d'un état de blocage, ou non, des balais d'essuie-glace 3 par le givre présent à la surface extérieure du pare-brise 2.

Si l'étape 150 de détermination révèle un blocage des balais d'essuie-glace par le givre, le système de pilotage émet un ordre 160 représentatif de cet état de blocage qui est traduit par le système sous la forme d'une instruction 170 d'arrêt du cycle de dégivrage.

Si l'étape 150 de détermination ne révèle pas de blocage des balais d'essuie-glace 3, le système de pilotage émet une instruction 180 de poursuite du cycle de dégivrage.

Si le résultat de l'étape 130 d'analyse est positif, c'est-à-dire si l'analyse des données fournies par le capteur 19 aboutit à un résultat de détection de neige présente sur la surface extérieure du pare-brise 2, le module électronique 20 de pilotage déclenche alors à l'étape 190 un cycle de déneigement de tout ou partie de la surface extérieure 1 du pare-brise 2.

Le système de nettoyage 100 effectue alors une ou plusieurs opérations de déneigement visant à débarrasser la surface extérieure du pare-brise 2 d'au moins une partie de la neige présente, notamment à fin de dégager la zone à dégivrer correspondant par exemple à un champ de vision minimal du conducteur.

Les opérations de déneigement sont par exemple constituées par un ou plusieurs balayage(s) effectué(s) par les balais d'essuie-glace 3.

Selon un mode classique, les balayages sont effectués entre les positions extrêmes PB et PH qui ont été précédemment décrites qui correspondent respectivement aux positions extrêmes basse et haute de balayage lors des opérations classiques d'essuyage du pare-brise en vue d'en évacuer l'eau.

À titre de variante, la mise en œuvre des balais d'essuie-glace 3 en vue d'évacuer la neige peut être effectuée selon un mode particulier de déneigement, qui est géré par le module électronique 20 et selon lequel l'un et ou l'autre des deux balais d'essuie-glace 3 est déplacé angulairement au-delà de l'une et/ou l'autre des deux positions extrêmes PB et ou PH, c'est-à-dire par exemple vers une grille située en partie inférieure du pare-brise 2, au-delà d'un joint de pare-brise situé en partie supérieure, de manière s'approcher au plus près ou de toucher un montant de pare-brise.

Dans un tel mode, on peut prévoir de ralentir la vitesse de balayage puis d'aller jusqu'au contact avec la grille inférieure ou un montant de pare-brise, jusqu'à ce que le moteur électrique d'entraînement détecte une résistance à l'avancement, par exemple par une mesure d'augmentation du couple, puis on revient en arrière.

La neige est ainsi évacuée « entièrement » en dehors du pare-brise.

La gestion du nombre d'opérations successives de déneigement effectuées par les balais d'essuie-glace 3 est gérée par le module électronique 20 de pilotage en association avec le capteur 19 jusqu'à évacuation totale ou quasi totale de la neige.

Selon une variante non représentée, le ou les capteurs d'évaluation de la présence de neige sont tels qu'ils permettent une évaluation initiale de l'épaisseur de la couche de neige ou de la quantité de neige à évacuer, le nombre d'opérations de balayage de la neige pouvant alors être établi initialement.

Un autre exemple de déclenchement éventuel d'un cycle de déneigement va être maintenant décrit qui ne se fonde pas sur une étape d'évaluation « in situ » de la présence ou non de neige sur le pare-brise 2 au moyen de capteurs embarqués à bord du véhicule.

Dans cet autre exemple, le dispositif électronique 20 de pilotage reçoit des informations qui sont représentatives de la probabilité, c'est-à-dire d'un niveau de probabilité, de présence de neige sur la surface extérieure 1 du pare-brise 2.

Ainsi, le conducteur peut transmettre à distance, par exemple au moyen du terminal portable 18, une information selon laquelle il a neigé ou il va neiger, cette information pouvant être plus ou moins riche de données indiquant éventuellement la quantité de neige tombée ou dont la chute est prévue, ou encore par exemple indiquant la chronologie des chutes de neige.

L'interrogation du conducteur sur la présence ou non de neige sur la surface extérieure du pare-brise 2 peut aussi être effectuée directement auprès de celui-ci lorsqu'il est à bord du véhicule et qu'il déclenche un cycle de dégivrage, en lui posant par tous moyens adaptés disponibles à bord du véhicule, une question telle que : « Y-a-t-il de la neige sur le pare-brise ? » ou bien « A-t-il neigé ? ».

Lorsque le conducteur gare son véhicule en vue de le quitter, il peut aussi entrer une information selon laquelle il pense qu'il va neiger, le système de pilotage 100, et notamment le boîtier électronique 20 de pilotage, pouvant être conçu et programmé pour effectuer un plusieurs cycles "préventifs" de déneigement pendant le stationnement du véhicule.

Les informations ou données, représentatives d'un niveau de probabilité de la présence de neige sur la surface extérieure du pare-brise 2, peuvent aussi être fournies au système de pilotage, et notamment au boîtier électronique 20 de pilotage, automatiquement sans intervention du conducteur.

Ainsi, le véhicule peut recevoir et mémoriser des informations relatives au climat et à la météorologie qui peuvent être associées ou non aux données fournies par le capteur 21 et qui sont représentatives de la position géographique du véhicule.

L'ensemble de ces données est alors analysé par le boîtier électronique 20 de pilotage qui détermine si la probabilité est supérieure à une valeur de seuil déterminée et qui, en fonction du résultat de cette étape d'analyse, déclenche ou non un cycle de déneigement plus ou moins important.

Le déclenchement d'un ou plusieurs cycles de déneigement, successifs ou décalés dans le temps, est alors une opération préventive de déneigement.

La durée de chaque cycle et/ou l'intervalle entre chaque cycle de déneigement peuvent-être calculés par le système de pilotage 100, et notamment par le boîtier électronique 20 de pilotage, notamment en prenant en compte des informations relatives au couple du ou des moteurs électriques 5 d'entraînement des balais d'essuie-glace 3.

Si l'on ne détecte aucune « résistance » au niveau du moteur, l'intervalle jusqu'au prochain cycle de déneigement sera allongé. Si l'on détecte une résistance importante, cette information pourra être analysée comme représentative de fortes chutes de neige et l'intervalle jusqu'au prochain cycle de déneigement sera raccourci.

On a représenté schématiquement à la figure 4 l'intégration d'un capteur 22 de mesure du niveau de charge de la batterie électrique du véhicule automobile qui permet notamment d'assurer l'alimentation en énergie électrique des moteurs 5 d'entraînement des balais d'essuie-glace lorsque le véhicule est à l'arrêt.

Le déplacement des balais d'essuie-glace 3 pour effectuer un cycle de déneigement, chaque cycle comportant une ou plusieurs opérations de déneigement par balayage de la surface extérieure 1 du pare-brise 2, est consommatrice d'énergie électrique.

La quantité d'énergie électrique nécessaire à la réalisation d'un cycle de déneigement peut être plus ou moins importante en fonction notamment de la quantité de neige à évacuer qui détermine le nombre d'opérations successives de balayage de la neige, et donc l'énergie consommée lors de chaque cycle de déneigement. De plus, l'épaisseur de la neige nécessite l'application d'un couple plus ou moins important par les moteurs électriques 5 ce qui modifie également la consommation électrique.

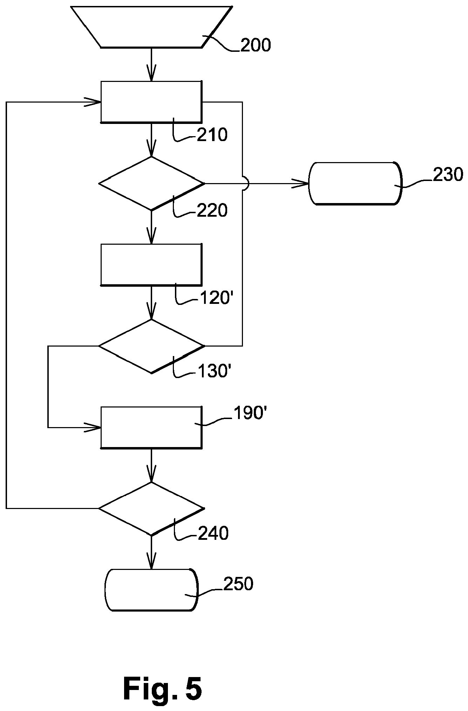

La prise en compte des informations relatives à la mesure du niveau d'énergie électrique disponible dans la batterie électrique du véhicule, dont la mesure est effectuée au moyen du capteur 22, est illustrée à la figure 5 dans le cadre du déclenchement d'un cycle de déneigement, ici indépendamment de tout autre déclenchement d'un autre cycle de nettoyage tel que par exemple un cycle de dégivrage.

A l'étape 200, au moyen du bouton de commande 16, ou de manière préventive et programmée, ou encore par transmission d'un ordre de déclenchement à distance comme expliqué précédemment, on transmet au boîtier électronique 20 de pilotage un ordre de lancement d'un cycle de déneigement, éventuellement à titre préventif.

Cet ordre est transmis au boîtier électronique 20 de pilotage qui, à l'étape 210, analyse les données fournies par le capteur 22 de mesure du niveau de charge de la batterie électrique du véhicule pour, à l'étape 220, déterminer si la batterie électrique est suffisamment chargée pour effectuer un tel cycle de déneigement ou au moins une partie du cycle de déneigement.

La notion de niveau suffisant de charge de la batterie électrique ne s'entend pas uniquement de la quantité d'électricité nécessaire pour effectuer une ou plusieurs opérations d'évacuation de la neige par balayage au moyen des balais d'essuie-glace 3, mais elle prend aussi en compte une quantité d'énergie électrique "minimale" suffisante après le cycle de déneigement, notamment pour permettre d'effectuer ensuite un démarrage du groupe motopropulseur du véhicule automobile.

Si le résultat de l'étape d'analyse du niveau de charge de la batterie 220 est négatif, le boîtier électronique 20 de pilotage émet alors une instruction 230 d'arrêt du cycle de déneigement.

Si l'étape 220 révèle un niveau suffisant de charge de la batterie électrique du véhicule, le dispositif électronique 20 de pilotage déclenche alors une étape 120' d'acquisition de données relatives à la présence ou non de neige sur la surface extérieure 1 du pare-brise 2 qui est analogue à l'étape 120 décrite précédemment.

Les données fournies par exemple par le capteur 19, ou les données relatives à la probabilité de présence de neige sur la surface extérieure 1 du pare-brise 2, sont alors analysées à l'étape 130' qui est analogue à l'étape 130 décrite précédemment.

Si l'étape 130' révèle qu'il n'y a pas de neige à évacuer, alors le dispositif électronique de pilotage soit interrompt le cycle de déneigement, soit met celui-ci en veille temporisée jusqu'à un nouveau déclenchement ultérieur.

Si l'étape 130' révèle la présence de neige à évacuer, alors le dispositif électronique 20 de pilotage déclenche une étape 190', analogue à l'étape 190 décrite précédemment qui comporte au moins une opération d'évacuation de la neige par balayage au moyen des balais d'essuie-glace 3.

Le cycle de déneigement peut ensuite comporter éventuellement une étape supplémentaire 240 de détermination du nombre d'opérations de balayage qui ont pu être effectuées notamment pour le comparer à un nombre d'opérations programmées ou déterminées en fonction du résultat d'une évaluation d'une quantité de neige présente sur la surface extérieure 1, ou dont la chute est attendue sur cette surface extérieure du pare-brise 2.

Si l'étape 240 révèle qu'un nombre suffisant d'opérations d'évacuation a été effectué, alors le dispositif électronique 20 de pilotage met fin au processus à l'étape 250.

Si l'étape 240 révèle que seulement un nombre insuffisant d'opérations a pu être effectué, le dispositif électronique 20 de pilotage déclenche alors une nouvelle interrogation de mesure du niveau de charge de la batterie électrique du véhicule à l'étape 210.

## Revendications

1. Procédé de pilotage d'un système (100) de nettoyage d'une vitre (2) de véhicule automobile, procédé qui comprend un cycle de déneigement comprenant :
- une étape (120) d'acquisition d'au moins une donnée qui est représentative de la présence ou de l'absence de neige sur une surface extérieure (1) de la vitre (2), ou qui est représentative de la probabilité de présence de neige sur une surface extérieure de la vitre ;
- et une étape (130) d'analyse de ladite donnée dont le résultat, lorsque la présence de neige a été détectée ou lorsque la probabilité de présence de neige est supérieure à une valeur de seuil déterminée, est de lancer une opération (190) de déneigement visant à débarrasser la vitre d'au moins une partie de la neige,
le cycle de déneigement étant déclenché en réponse à un ordre de déneigement émis par un utilisateur du véhicule, l'ordre de déneigement étant émis à distance par un utilisateur du véhicule et transmis au système de nettoyage,
le procédé étant **caractérisé en ce que**, préalablement au démarrage d'un cycle de déneigement, ou au cours d'un cycle de déneigement, le procédé comporte une étape (210) de mesure d'un niveau d'énergie disponible à bord du véhicule pour l'entraînement de moyens (3) de balayage de la surface extérieure de la vitre, lorsque l'étape (210) de mesure révèle un niveau d'énergie disponible inférieur à une valeur de seuil déterminée, le cycle de déneigement ne démarre pas ou est interrompu, de préférence une information correspondante est transmise à un utilisateur du véhicule, de préférence le niveau d'énergie disponible est un niveau de charge d'une batterie électrique du véhicule.

2. Procédé selon la revendication 1, **caractérisé en ce que** l'opération de déneigement est réitérée jusqu'à l'obtention d'un niveau déterminé de déneigement de la vitre.

3. Procédé selon la revendication 1 ou 2, **caractérisé en ce que**, en réponse audit ordre de déneigement, le cycle de déneigement est déclenché de manière différée et/ou séquentielle.

4. Procédé selon l'une quelconque des revendications précédentes, **caractérisé en ce que** l'étape (120) d'acquisition d'au moins une donnée représentative de la présence ou de l'absence de neige sur la surface extérieure de la vitre est réalisée au moyen d'au moins un capteur (19) embarqué à bord du véhicule.

5. Procédé selon l'une quelconque des revendications précédentes, **caractérisé en ce que** l'étape (120) d'acquisition d'au moins une donnée représentative de la probabilité de présence de neige sur la surface extérieure de la vitre est une étape d'acquisition de données météorologiques et/ou de localisation géographique du véhicule à l'arrêt et/ou en cours de roulage.

6. Procédé selon l'une quelconque des revendications précédentes, **caractérisé en ce que** ladite opération de déneigement est effectuée au moyen d'un dispositif de nettoyage de la surface extérieure (1) de la vitre (2) qui est conçu pour débarrasser la vitre d'au moins une partie d'une neige présente sur cette surface et qui comporte au moins un balai d'essuie-glace (3) conçu pour fonctionner :
- selon un premier mode, d'essuyage, au cours duquel il se déplace angulairement entre une position extrême d'essuyage (PB) et une autre position extrême d'essuyage (PH) ;
- et selon un deuxième mode, de déneigement, au cours duquel il peut se déplacer angulairement entre deux positions extrêmes de balayage de la neige dont l'une au moins est située angulairement au delà de l'une desdites deux positions extrêmes d'essuyage (PB, PH).

7. Système (100) de pilotage d'un dispositif de nettoyage d'une vitre de véhicule automobile, comprenant :
- au moins un capteur (19) d'acquisition d'au moins une donnée qui est représentative de la présence ou de l'absence de neige sur une surface extérieure (1) de la vitre (2), ou qui est représentative de la probabilité de présence de neige sur une surface extérieure de la vitre ;
- et un premier moyen électronique (20) de communication au moins avec le capteur (19) d'acquisition, et de réception d'un ordre de déclenchement d'un cycle de déneigement,
**caractérisé en ce que** le premier moyen électronique (20) est conçu :
- pour analyser ladite au moins une donnée ;
- et pour, lorsque la présence de neige a été détectée ou lorsque la probabilité de présence de neige est supérieure à une valeur de seuil déterminée, lancer au moins une opération (190) de déneigement de la vitre visant à débarrasser la vitre d'au moins une partie de la neige,
le système comprenant un deuxième moyen électronique (17) qui est connecté au premier moyen électronique (20) et qui est conçu pour communiquer avec un terminal portable (18) de manière à recevoir au moins un ordre émis à distance par un utilisateur du véhicule, et de manière à transmettre à l'utilisateur des informations provenant du système, les informations à transmettre à l'utilisateur comportant une information relative au non déclenchement d'un cycle de déneigement et/ou à l'interruption d'un cycle de déneigement,
le système étant **caractérisé en ce qu'**il comprend au moins un capteur de mesure (22) d'un niveau d'énergie disponible à bord du véhicule pour l'entraînement de moyens (3) de balayage de la surface extérieure (1) de la vitre (2), le capteur de mesure (22) étant connecté audit premier moyen électronique (20), et le premier moyen électronique (20) étant conçu pour ne pas déclencher, ou pour interrompre le cycle de déneigement, lorsque la valeur d'un niveau d'énergie mesurée par le capteur de mesure est inférieur à une valeur de seuil déterminée, le capteur de mesure étant de préférence un capteur de mesure (22) d'un niveau de charge d'une batterie électrique du véhicule.

8. Système selon la revendication 7, **caractérisé en ce qu'**il comprend des moyens de déclenchement d'un cycle (140) de nettoyage de la vitre qui peut être déclenché à l'issue du cycle de déneigement, ledit cycle de nettoyage (140) étant de préférence un cycle de dégivrage de la vitre.

9. Système selon l'une quelconque des revendications 7 à 8, **caractérisé en ce que** ledit au moins un capteur (19) d'acquisition d'au moins une donnée représentative de la présence ou de l'absence de neige sur la surface extérieure de la vitre est un capteur embarqué à bord du véhicule.

10. Système selon l'une quelconque des revendications 7 à 9, **caractérisé en ce que** ledit au moins un capteur d'acquisition d'au moins une donnée représentative de la probabilité de présence de neige sur la surface extérieure (1) de la vitre (2) est un capteur d'acquisition de données météorologiques (21) et/ou de localisation géographique du véhicule à l'arrêt et/ou en cours de roulage.

11. Ensemble **caractérisé en ce qu'**il comporte un système de pilotage d'un dispositif de nettoyage (100) selon l'une quelconque des revendications 7 à 10, et un dispositif de nettoyage de la vitre conçu pour effectuer au moins une opération de balayage de la surface extérieure (1) de la vitre (2) visant à la débarrasser d'au moins une partie d'une neige présente sur cette surface, le dispositif de nettoyage (100) comportant au moins un balai d'essuie-glace (3), ledit balai d'essuie-glace (3) étant de préférence conçu pour fonctionner :
- selon un premier mode, d'essuyage, au cours duquel il se déplace angulairement entre une position extrême d'essuyage (PB) et une autre position extrême d'essuyage (PH) ;
- et selon un second mode, de déneigement, au cours duquel il peut se déplacer angulairement entre deux positions extrêmes de balayage de la neige dont l'une au moins est située angulairement au delà de l'une desdites deux positions extrêmes d'essuyage (PB, PH).

## Patentansprüche

1. Verfahren zur Steuerung eines Systems (100) zur Reinigung eines Fensters (2) eines Kraftfahrzeugs, wobei dieses Verfahren einen Schneebeseitigungszyklus umfasst, welcher umfasst:
- einen Schritt (120) der Erfassung wenigstens eines Datenelements, welches für das Vorhandensein oder das Nichtvorhandensein von Schnee auf einer Außenfläche (1) des Fensters (2) repräsentativ ist oder welches für die Wahrscheinlichkeit des Vorhandenseins von Schnee auf einer Außenfläche des Fensters repräsentativ ist;
- und einen Schritt (130) der Analyse des Datenelements, dessen Ergebnis, wenn das Vorhandensein von Schnee erkannt worden ist oder wenn die Wahrscheinlichkeit des Vorhandenseins von Schnee größer als ein bestimmter Schwellenwert ist, darin besteht, einen Arbeitsvorgang (190) der Schneebeseitigung einzuleiten, welcher bezweckt, das Fenster von wenigstens einem Teil des Schnees zu befreien,
wobei der Schneebeseitigungszyklus in Reaktion auf einen Schneebeseitigungsbefehl ausgelöst wird, der von einem Benutzer des Fahrzeugs gesendet wird, wobei der Schneebeseitigungsbefehl von einem Benutzer des Fahrzeugs aus der Ferne gesendet und an das Reinigungssystem übertragen wird,
wobei das Verfahren **dadurch gekennzeichnet ist, dass** vor dem Start eines Schneebeseitigungszyklus oder während eines Schneebeseitigungszyklus das Verfahren einen Schritt (210) der Messung eines Energieniveaus umfasst, das an Bord des Fahrzeugs für den Antrieb von Mitteln (3) zum Kehren der Außenfläche des Fensters verfügbar ist, und wenn der Schritt (210) der Messung ein verfügbares Energieniveau aufzeigt, das niedriger als ein bestimmter Schwellenwert ist, der Schneebeseitigungszyklus nicht startet oder unterbrochen wird, vorzugsweise eine entsprechende Information an einen Benutzer des Fahrzeugs übertragen wird und vorzugsweise das verfügbare Energieniveau ein Ladeniveau einer elektrischen Batterie des Fahrzeugs ist.

2. Verfahren nach Anspruch 1, **dadurch gekennzeichnet, dass** der Arbeitsvorgang der Schneebeseitigung bis zur Erzielung eines bestimmten Niveaus der Schneebeseitigung des Fensters wiederholt wird.

3. Verfahren nach Anspruch 1 oder 2, **dadurch gekennzeichnet, dass** in Reaktion auf den Schneebeseitigungsbefehl der Schneebeseitigungszyklus verzögert und/oder sequentiell ausgelöst wird.

4. Verfahren nach einem der vorhergehenden Ansprüche, **dadurch gekennzeichnet, dass** der Schritt (120) der Erfassung wenigstens eines Datenelements, welches für das Vorhandensein oder das Nichtvorhandensein von Schnee auf der Außenfläche des Fensters repräsentativ ist, mittels wenigstens eines Sensors (19) durchgeführt wird, der an Bord des Fahrzeugs mitgeführt wird.

5. Verfahren nach einem der vorhergehenden Ansprüche, **dadurch gekennzeichnet, dass** der Schritt (120) der Erfassung wenigstens eines Datenelements, welches für die Wahrscheinlichkeit des Vorhandenseins von Schnee auf der Außenfläche des Fensters repräsentativ ist, ein Schritt der Erfassung von meteorologischen Daten und/oder der geographischen Positionsbestimmung des Fahrzeugs im Stillstand und/oder während der Fahrt ist.

6. Verfahren nach einem der vorhergehenden Ansprüche, **dadurch gekennzeichnet, dass** der Arbeitsvorgang der Schneebeseitigung mittels einer Vorrichtung zur Reinigung der Außenfläche (1) des Fensters (2) durchgeführt wird, welche dafür eingerichtet ist, das Fenster von wenigstens einem Teil des auf dieser Fläche vorhandenen Schnees zu befreien, und welche wenigstens ein Scheibenwischerblatt (3) aufweist, das dafür eingerichtet ist zu arbeiten:
- gemäß einem ersten Modus, dem des Wischens, in welchem es sich in Winkelrichtung zwischen einer äußersten Wischposition (PB) und einer anderen äußersten Wischposition (PH) bewegt;
- und gemäß einem zweiten Modus, dem der Schneebeseitigung, in welchem es sich in Winkelrichtung zwischen zwei äußersten Positionen des Kehrens des Schnees bewegen kann, von denen sich wenigstens eine in Winkelrichtung jenseits einer der zwei äußersten Wischpositionen (PB, PH) befindet.

7. System (100) zur Steuerung einer Vorrichtung zur Reinigung eines Fensters eines Kraftfahrzeugs, welches umfasst:
- wenigstens einen Sensor (19) zur Erfassung wenigstens eines Datenelements, welches für das Vorhandensein oder das Nichtvorhandensein von Schnee auf einer Außenfläche (1) des Fensters (2) repräsentativ ist oder welches für die Wahrscheinlichkeit des Vorhandenseins von Schnee auf einer Außenfläche des Fensters repräsentativ ist;
- und ein erstes elektronisches Mittel (20) zur Kommunikation mit wenigstens dem Sensor (19) zur Erfassung und zum Empfang eines Befehls zur Auslösung eines Schneebeseitigungszyklus,
**dadurch gekennzeichnet, dass** das erste elektronische Mittel (20) dafür eingerichtet ist:
- das wenigstens eine Datenelement zu analysieren;
- und, wenn das Vorhandensein von Schnee erkannt worden ist oder wenn die Wahrscheinlichkeit des Vorhandenseins von Schnee größer als ein bestimmter Schwellenwert ist, wenigstens einen Arbeitsvorgang (190) der Schneebeseitigung für das Fenster einzuleiten, welcher bezweckt, das Fenster von wenigstens einem Teil des Schnees zu befreien, wobei das System ein zweites elektronisches Mittel (17) umfasst, welches mit dem ersten elektronischen Mittel (20) verbunden ist und welches dafür eingerichtet ist, mit einem tragbaren Endgerät (18) zu kommunizieren, um wenigstens einen Befehl zu empfangen, der von einem Benutzer des Fahrzeugs aus der Ferne gesendet wurde, und um von dem System stammende Informationen an den Benutzer zu übertragen, wobei die an den Benutzer zu übertragenden Informationen eine Information umfassen, die sich auf die Nichtauslösung eines Schneebeseitigungszyklus und/oder auf die Unterbrechung eines Schneebeseitigungszyklus bezieht,
wobei das System **dadurch gekennzeichnet ist, dass** es wenigstens einen Messfühler (22) für ein Energieniveau umfasst, das an Bord des Fahrzeugs für den Antrieb von Mitteln (3) zum Kehren der Außenfläche (1) des Fensters (2) verfügbar ist, wobei der Messfühler (22) mit dem ersten elektronischen Mittel (20) verbunden ist und das erste elektronische Mittel (20) dafür eingerichtet ist, den Schneebeseitigungszyklus nicht auszulösen oder zu unterbrechen, wenn der von dem Messfühler gemessene Wert eines Energieniveaus niedriger als ein bestimmter Schwellenwert ist, wobei der Messfühler vorzugsweise ein Messfühler (22) für ein Ladeniveau einer elektrischen Batterie des Fahrzeugs ist.

8. System nach Anspruch 7, **dadurch gekennzeichnet, dass** es Mittel zur Auslösung eines Zyklus (140) der Reinigung des Fensters umfasst, welcher nach Abschluss des Schneebeseitigungszyklus ausgelöst werden kann, wobei der Reinigungszyklus (140) vorzugsweise ein Zyklus der Entfrostung des Fensters ist.

9. System nach einem der Ansprüche 7 bis 8, **dadurch gekennzeichnet, dass** der wenigstens eine Sensor (19) zur Erfassung wenigstens eines Datenelements, welches für das Vorhandensein oder das Nichtvorhandensein von Schnee auf der Außenfläche des Fensters repräsentativ ist, ein Sensor ist, der an Bord des Fahrzeugs mitgeführt wird.

10. System nach einem der Ansprüche 7 bis 9, **dadurch gekennzeichnet, dass** der wenigstens eine Sensor zur Erfassung wenigstens eines Datenelements, welches für die Wahrscheinlichkeit des Vorhandenseins von Schnee auf der Außenfläche (1) des Fensters (2) repräsentativ ist, ein Sensor zur Erfassung von meteorologischen Daten (21) und/oder zur geographischen Positionsbestimmung des Fahrzeugs im Stillstand und/oder während der Fahrt ist.

11. Anordnung, **dadurch gekennzeichnet, dass** sie ein System zur Steuerung einer Vorrichtung zur Reinigung (100) nach einem der Ansprüche 7 bis 10 und eine Vorrichtung zur Reinigung des Fensters, die dafür eingerichtet ist, wenigstens einen Arbeitsvorgang des Kehrens der Außenfläche (1) des Fensters (2), welcher bezweckt, es von wenigstens einem Teil des auf dieser Fläche vorhandenen Schnees zu befreien, aufweist, wobei die Vorrichtung zur Reinigung (100) wenigstens ein Scheibenwischerblatt (3) aufweist, wobei das Scheibenwischerblatt (3) vorzugsweise dafür eingerichtet ist zu arbeiten:
- gemäß einem ersten Modus, dem des Wischens, in welchem es sich in Winkelrichtung zwischen einer äußersten Wischposition (PB) und einer anderen äußersten Wischposition (PH) bewegt;
- und gemäß einem zweiten Modus, dem der Schneebeseitigung, in welchem es sich in Winkelrichtung zwischen zwei äußersten Positionen des Kehrens des Schnees bewegen kann, von denen sich wenigstens eine in Winkelrichtung jenseits einer der zwei äußersten Wischpositionen (PB, PH) befindet.

## Claims

1. Method for controlling a system (100) for cleaning a motor vehicle window (2), which method comprises a snow removal cycle comprising:
- a step (120) of acquiring at least one datum that is representative of the presence or absence of snow on an outer surface (1) of the window (2), or that is representative of the probability of presence of snow on an outer surface of the window;
- and a step (130) of analysing said datum, the result of which, when the presence of snow has been detected or when the probability of presence of snow is above a determined threshold value, is to launch a snow removal operation (190) aiming to clear the window of at least some of the snow, the snow removal cycle being triggered in response to a snow removal order sent by a user of the vehicle, the snow removal order being sent remotely by a user of the vehicle and transmitted to the cleaning system,
the method being **characterized in that**, prior to starting a snow removal cycle, or during a snow removal cycle, the method comprises a step (210) of measuring a level of energy available on board the vehicle for driving means (3) for sweeping the outer surface of the window, when the measuring step (210) reveals a level of energy available that is below a determined threshold value, the snow removal cycle does not start or is interrupted, preferably corresponding information is transmitted to a user of the vehicle, preferably the level of energy available is a level of charge of an electric battery of the vehicle.

2. Method according to Claim 1, **characterized in that** the snow removal operation is reiterated until a determined level of snow removal from the window is obtained.

3. Method according to one of Claims 1 and 2, **characterized in that**, in response to said snow removal order, the snow removal cycle is triggered in a delayed and/or sequential manner.

4. Method according to any one of the preceding claims, **characterized in that** the step (120) of acquiring at least one datum representative of the presence or absence of snow on the outer surface of the window is performed by means of at least one sensor (19) on board the vehicle.

5. Method according to any one of the preceding claims, **characterized in that** the step (120) of acquiring at least one datum representative of the probability of presence of snow on the outer surface of the window is a step of acquiring meteorological data and/or data on the geographic location of the vehicle at standstill and/or in motion.

6. Method according to any one of the preceding claims, **characterized in that** said snow removal operation is performed by means of a device for cleaning the outer surface (1) of the window (2) which is designed to clear the window of at least some of the snow present on this surface and which comprises at least one wiper (3) designed to operate:
- in a first, wiping, mode, during which it moves angularly between one wiping end position (PB) and another wiping end position (PH);
- and in a second, snow removal, mode, during which it can move angularly between two snow-sweeping end positions, at least one of which is located angularly beyond one of said two wiping end positions (PB, PH).

7. System (100) for controlling a device for cleaning a motor vehicle window, comprising:
- at least one sensor (19) for acquiring at least one datum that is representative of the presence or absence of snow on an outer surface (1) of the window (2), or that is representative of the probability of presence of snow on an outer surface of the window;
- and a first electronic means (20) for communicating at least with the acquisition sensor (19), and for receiving an order to trigger a snow removal cycle,
**characterized in that** the first electronic means (20) is designed:
- to analyse said at least one datum;
- and, when the presence of snow has been detected or when the probability of presence of snow is above a determined threshold value, to launch at least one operation (190) of removing snow from the window aiming to clear the window of at least some of the snow,
the system comprising a second electronic means (17) that is connected to the first electronic means (20) and that is designed to communicate with a portable terminal (18) so as to receive at least one order sent remotely by a user of the vehicle, and so as to transmit information originating from the system to the user, the information to be transmitted to the user comprising information relating to the non-triggering of a snow removal cycle and/or to the interruption of a snow removal cycle,
the system being **characterized in that** it comprises at least one sensor (22) for measuring a level of energy available on board the vehicle for driving means (3) for sweeping the outer surface (1) of the window (2), the measurement sensor (22) being connected to said first electronic means (20), and the first electronic means (20) being designed to not trigger or to interrupt the snow removal cycle when the value of a level of energy measured by the measurement sensor is below a determined threshold value, the measurement sensor preferably being a sensor (22) for measuring a level of charge of an electric battery of the vehicle.

8. System according to Claim 7, **characterized in that** it comprises means for triggering a window cleaning cycle (140) which can be triggered upon completion of the snow removal cycle, said cleaning cycle (140) preferably being a window defrosting cycle.

9. System according to either one of Claims 7 and 8, **characterized in that** said at least one sensor (19) for acquiring at least one datum representative of the presence or absence of snow on the outer surface of the window is a sensor on board the vehicle.

10. System according to any one of Claims 7 to 9, **characterized in that** said at least one sensor for acquiring at least one datum representative of the probability of presence of snow on the outer surface (1) of the window (2) is a sensor for acquiring meteorological data (21) and/or data on the geographic location of the vehicle at standstill and/or in motion.

11. Assembly **characterized in that** it comprises a system for controlling a cleaning device (100) according to any one of Claims 7 to 10, and a window cleaning device designed to perform at least one operation of sweeping the outer surface (1) of the window (2) aiming to clear it of at least some of the snow present on this surface, the cleaning device (100) comprising at least one wiper (3), said wiper (3) preferably being designed to operate:
- in a first, wiping, mode, during which it moves angularly between one wiping end position (PB) and another wiping end position (PH);
- and in a second, snow removal, mode, during which it can move angularly between two snow-sweeping end positions, at least one of which is located angularly beyond one of said two wiping end positions (PB, PH).
